# EUROPEAN PATENT APPLICATION

(11) **EP 4 601 105 A1**
(43) Date of publication of application: **13.08.2025**
(21) Application number: 25153215.6
(22) Date of filing: 22.01.2025
(51) Int. Cl.: H01M 50/503, H01M 50/507, H01M 50/509, H01M 50/516, H01M 50/522, H01M 50/529

(54) **BATTERY PACK AND VEHICLE INCLUDING SAME**

(30) Priority: 07.02.2024 KR 20240019095
(71) Applicant: LG Energy Solution, Ltd., Seoul 07335 (KR)
(72) Inventor: JUNG, In-Hyuk, 34122 Daejeon (KR); AHN, Jun-Young, 34122 Daejeon (KR); LEE, Yong-Ho, 34122 Daejeon (KR); YANG, Jin-Oh, 34122 Daejeon (KR)
(74) Representative: Plasseraud IP

(57) **Abstract**

A battery pack according to an aspect of the present disclosure may include a plurality of battery cells, a bus-bar assembly disposed on one side of the plurality of battery cells and including a sub-bus-bar unit connected to positive electrodes and negative electrodes of the plurality of battery cells, and a side frame configured to support the plurality of battery cells at the bottom of the bus-bar assembly and including a metal member connected to the sub-bus-bar unit.

## Description

### TECHNICAL FIELD

The present disclosure relates to a battery pack and a vehicle including the same, and relates to a battery pack with improved stability of electrical connection and a vehicle including the same.

### BACKGROUND ART

Secondary batteries, which are easy to apply depending on the product group and have electrical features such as high energy density and the like, are generally used in electric vehicles (EVs) or hybrid electric vehicles (HEVs) that are driven by an electrical drive source, as well as in portable devices. These secondary batteries are attracting attention as a new energy source for improving eco-friendliness and energy efficiency because of the primary advantage of dramatically reducing the use of fossil fuels and another advantage of not generating by-products resulting from energy use.

Current secondary batteries widely used include lithium-ion batteries, lithium-polymer batteries, nickel-cadmium batteries, nickel-hydrogen batteries, nickel-zinc batteries, and the like. The operating voltage of this unit secondary battery cell, that is, the unit battery cell, is approximately 2.5V to 4.5V. Therefore, when an output voltage higher than this is required, a battery pack may be configured by connecting a plurality of battery cells in series. In addition, a battery pack may be configured by connecting multiple battery cells in parallel depending on the charge/discharge capacity required for the battery pack. Accordingly, the number of battery cells included in the battery pack may be set in various ways depending on the required output voltage or charge/discharge capacity.

These days, medium- to large-sized battery packs applied to electric vehicles or the like are configured to include a large number of battery cells with higher cell capacity to increase output and/or capacity, and these battery cells are electrically connected through a bus-bar.

Such medium- to large-sized battery packs relatively more require the safety in the electrical connection structure of the bus-bars. If a large-sized bus-bar is applied to ensure the stability of electrical connection structure, the overall size of a battery pack increases due to the space occupied by the large-sized bus-bar, thereby hindering slimming of the battery pack and reducing the energy density of the battery pack.

Therefore, it is necessary to find a way to maximize the energy density while ensuring the stability of electrical connection structure in large-capacity battery packs such as medium-to-large battery packs.

### DISCLOSURE

### Technical Problem

The present disclosure has been designed to solve the problems of the related art, and therefore the present disclosure is directed to providing a battery pack capable of maximizing energy density while ensuring the stability of the electrical connection structure, and a vehicle including the same.

In addition, the present disclosure is also directed to providing a battery pack capable of further increasing structural rigidity and a vehicle including the same.

However, the technical problems that the present disclosure seeks to solve are not limited to the above-mentioned problems, and other problems not mentioned above will be clearly understood by those skilled in the art from the description of the invention described below.

### Technical Solution

According to one aspect of the present disclosure, there is provided a battery pack that includes: a plurality of battery cells; a bus-bar assembly disposed on one side of the plurality of battery cells and including a sub-bus-bar unit connected to electrodes of the plurality of battery cells; and a side frame configured to support the plurality of battery cells at the bottom of the bus-bar assembly and including a metal member connected to the sub-bus-bar unit.

The bus-bar assembly may be arranged on an upper side of the plurality of battery cells, said upper side comprising the electrodes. The side frame may be arranged on a lateral side of the plurality of battery cells, said lateral side being devoid of the electrodes, i.e. not comprising the electrodes.

The bottom of the plurality of battery cells may be arranged at a lower side of the battery cell, said lower side being opposite to the upper side. The upper side of the battery cells may be arranged along a first XY plane and the lower side may be in a second XY plane, the first XY plane being above the second XY plane according to +Z-axis direction. The side frame may be arranged along a first XZ plane perpendicular to the XY plane.

The bus-bar assembly may be disposed on the top of the plurality of battery cells (in a +Z-axis direction) so as to be electrically connected to the plurality of battery cells in one direction.

The side frame may support the plurality of battery cells at the bottom of the bus-bar assembly (in a -Z-axis direction).

In addition, preferably, the sub-bus-bar unit may include: a two-way connection bus-bar connected to electrodes of the battery cells on both sides of the sub-bus-bar unit in the width direction (in a Y axis direction); and a one-way connection bus-bar connected to the electrodes of the battery cells on one side of the sub-bus-bar unit in the width direction, and the metal member may be connected to the one-way connection bus-bar.

In addition, preferably, a portion of the metal member may be in contact with the one-way connection bus-bar at the top of the side frame, and the remaining portions of the metal member may be inserted into the side frame.

Said remaining portion of the metal member may be embedded into the side frame. The term "inserted into" is used to mean "embedded into", "embedded within" "integrated in" and "encapsulated within".

A plurality of metal members may be provided. The plurality of metal members may be provided to correspond to the number of one-way connection bus-bars of the sub-bus-bar unit.

In addition, preferably, the metal member may be inserted into the side frame and have one end that is bent to be in connect with the one-way connection bus-bar at the top of the side frame.

In addition, preferably, the metal member may include: an insertion portion inserted into the side frame; and a bus-bar connection portion bent from the insertion portion to be connected to the one-way connection bus-bar outside the side frame.

A ratio between the length of the insertion portion of the metal member (Z-axis direction) and the height of the side frame (Z-axis direction) may be from 1:4 to 9:10, in particular from 1:3 to 3:4, more particularly from 1:2 and 2:3. Advantageously, such ratio increases the structural stability of the battery pack of the present invention and of a vehicle including the same.

The side frame may be made of polycarbonate, acrylonitrile butadiene styrene, modified polyphenylene oxide, glass fibers or a mixture thereof, in particular polycarbonate, a mixture of polycarbonate and acrylonitrile butadiene styrene or a mixture of modified polyphenylene oxide and glass fibers. Such material, in combination with the metal of the metal member increase the structural stability of the battery pack of the present invention and of a vehicle including the same.

In addition, preferably, the bus-bar connection portion may include: a connection body formed to have a predetermined length in the longitudinal direction of the one-way connection bus-bar; and a protrusion protruding a predetermined length from the connection body toward the one-way connection bus-bar so as to be in contact with the one-way connection bus-bar.

In addition, preferably, the protrusion may be connected to the one-way connection bus-bar by welding.

In addition, preferably, the protrusion may be configured in a trapezoidal shape.

In addition, preferably, a plurality of protrusion may be provided to be spaced a predetermined distance apart from each other in the longitudinal direction of the connection body.

In addition, preferably, the plurality of protrusions may be disposed between the plurality of battery cells in the longitudinal direction of the connection body.

In addition, preferably, the one-way connection bus-bar may be provided in the outermost portions on both sides of the sub-bus-bar unit, and the metal member may be provided in the outermost portions on both sides of the side frame.

In addition, preferably, the side frame may include: a plurality of side structures configured to support the plurality of battery cells; and a pair of side walls provided in the outermost portions on both sides of the plurality of side structures, and the metal member may be provided on the pair of side walls.

The plurality of side structures may be formed to have a predetermined length in the longitudinal direction (X-axis direction) of the battery pack, and may receive and support the battery cells in two rows.

Accordingly, each side wall may extend longitudinally to cover the length of the battery rows.

In addition, preferably, the metal member may be mounted to the side frame through an insert molding process.

In addition, preferably, the metal member may be made of aluminum.

In addition, preferably, the thickness of the metal member may be at least 2 mm.

In addition, the present disclosure may also provide a vehicle including at least one battery pack described above.

### Advantageous Effects

According to the various aspects described above, it may be possible to provide a battery pack capable of maximizing energy density while ensuring the stability of the electrical connection structure, and a vehicle including the same.

In addition, according to the various aspects described above, it may be possible to provide a battery pack capable of further increasing structural rigidity and a vehicle including the same.

Furthermore, various other effects of the present disclosure will be described in detail with respect to aspects of the present disclosure. It should be noted that description of some effects that may be easily inferred by those skilled in the art may be omitted.

### DESCRIPTION OF DRAWINGS

The accompanying drawings illustrate a aspects of the present disclosure and, together with the detailed description, serve to provide further understanding of the technical idea of the present disclosure. It should be noted that the present disclosure is necessarily limited to the aspects depicted in the drawings.
FIG. 1 is a diagram illustrating a battery pack according to an aspect of the present disclosure.
FIG. 2 is a plan view schematically illustrating a battery pack according to an aspect of the present disclosure.
FIG. 3 is a schematically enlarged view of part A of the battery pack in FIG. 2.
FIG. 4 is a cross-sectional view schematically illustrating part A of the battery pack in FIG. 2.
FIG. 5 is a schematically enlarged view of primary elements of the battery pack in FIG. 4.
FIG. 6 is a partially exploded perspective view of a battery pack according to an aspect of the present disclosure.
FIG. 7 is an exploded perspective view of a bus-bar assembly of the battery pack in FIG. 6.
FIG. 8 is a diagram illustrating a two-way connection bus-bar of a sub-bus-bar unit of the bus-bar assembly in FIG. 7.
FIG. 9 is a diagram illustrating a one-way connection bus-bar of a sub-bus-bar unit of the bus-bar assembly in FIG. 7.
FIG. 10 is an exploded perspective view of a side wall of a side frame of the battery pack in FIG. 6.
FIG. 11 is a diagram illustrating a metal member provided on the side wall in FIG. 10.
FIG. 12 is a plan view schematically illustrating the side wall in FIG. 10 from which the metal member was removed.
FIG. 13 is a cross-sectional view schematically illustrating the side wall in FIG. 10 including the metal member.
FIG. 14 is a schematically enlarged view of primary elements of the side wall including the metal member in FIG. 13.
FIG. 15 is a diagram illustrating the connection between a bus-bar assembly and a metal member of the battery pack according to an aspect of the present disclosure.
FIG. 16 is a diagram illustrating a battery pack according to another aspect of the present disclosure.
FIG. 17 is a diagram illustrating a metal member provided on a side wall of a side frame of the battery pack in FIG. 16.
FIG. 18 is a diagram illustrating a battery pack according to another aspect of the present disclosure.
FIG. 19 is an exploded perspective view of a side wall of a side frame provided in the battery pack in FIG. 18.
FIG. 20 is a perspective view of a metal member provided on the side wall in FIG. 19.
FIG. 21 is a side view of the metal member in FIG. 20.
FIG. 22 is a cross-sectional view illustrating the side wall in FIG. 19 including the metal member.
FIG. 23 is a schematically enlarged view of primary elements of the side wall including the metal member in FIG. 22.
FIG. 24 is a diagram illustrating a battery pack according to another aspect of the present disclosure.
FIG. 25 is a diagram illustrating a one-way connection bus-bar of a sub-bus-bar unit of a bus-bar assembly of the battery pack in FIG. 24.
FIG. 26 is a diagram illustrating a one-way connection bus-bar according to another aspect of the sub-bus-bar unit of the bus-bar assembly of the battery pack in FIG. 24.
FIG. 27 is a diagram illustrating the connection between the one-way connection bus-bar and the metal member of the bus-bar assembly of the battery pack in FIG. 24.
FIG. 28 is a diagram illustrating a vehicle according to an aspect of the present disclosure.

### BEST MODE

Hereinafter, aspect of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

The configurations proposed in the aspects and drawings of this specification describe various aspect of the present disclosure but may not represent all technical ideas of the present disclosure. It should be understood that various equivalents and modifications could be made thereto at the time of filing the application.

Although terms indicating directions such as upward, downward, left, right, forward, and backward directions are used in this specification, these terms are only for convenience of explanation and may vary depending on the location of the target object or the location of the observer.

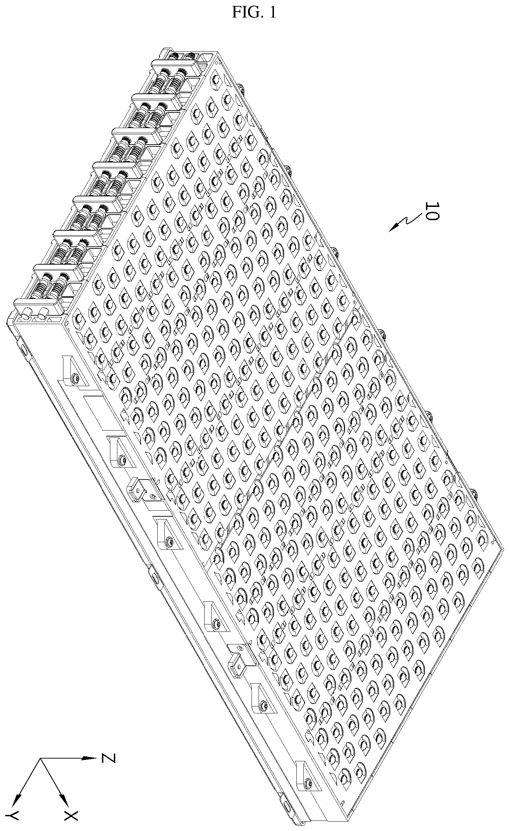

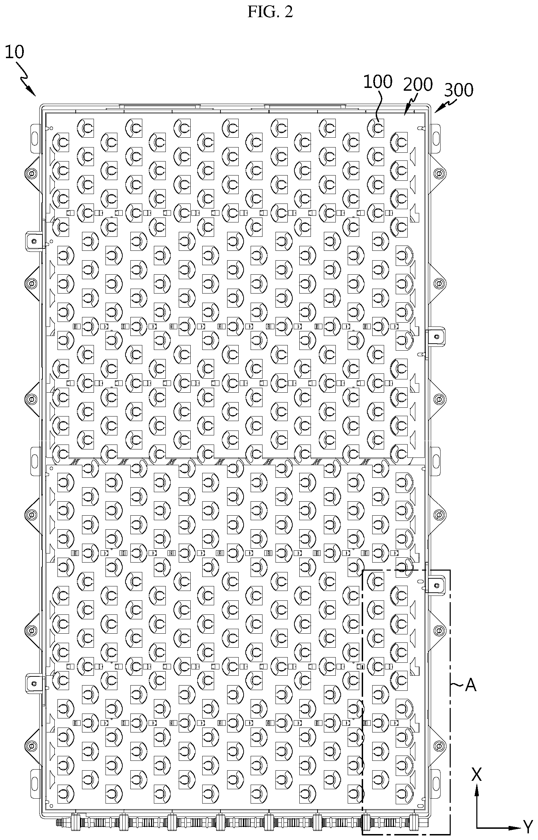

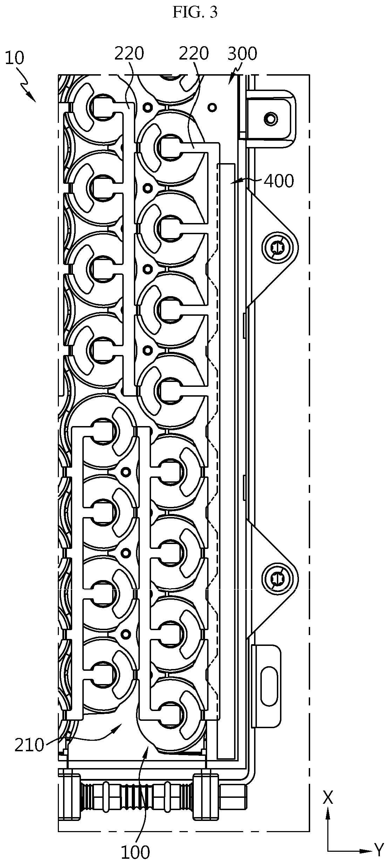

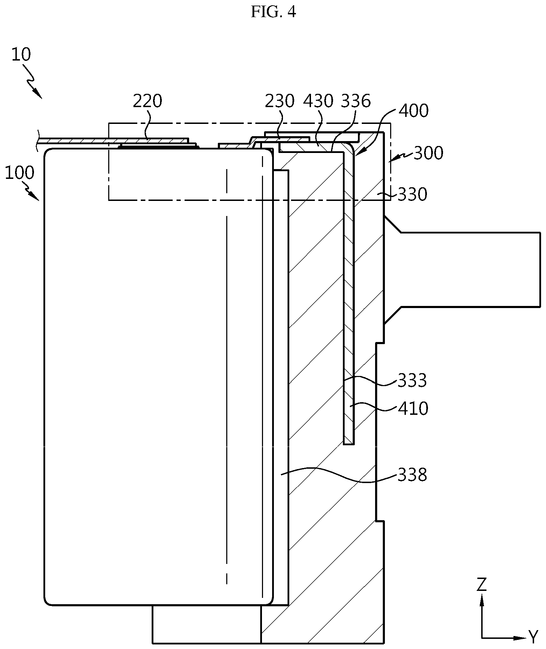

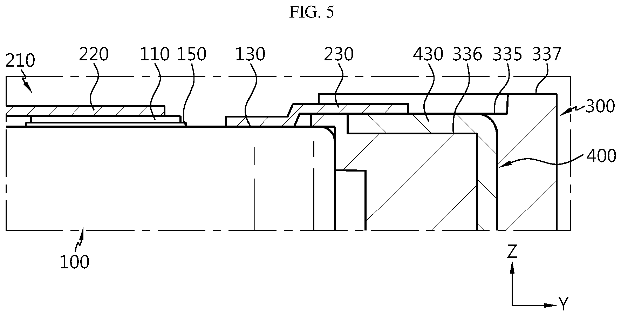

FIG. 1 is a diagram illustrating a battery pack according to an aspect of the present disclosure, FIG. 2 is a plan view schematically illustrating a battery pack according to an aspect of the present disclosure, FIG. 3 is a schematically enlarged view of part A of the battery pack in FIG. 2, FIG. 4 is a schematically enlarged view of part A of the battery pack in FIG. 2, and FIG. 5 is a schematically enlarged view of primary elements of the battery pack in FIG. 4. The configuration of the bus-bar covers 250 and 260 of the bus-bar assembly 200 is omitted from FIGS. 3 to 5 for convenience of explanation.

Referring to FIGS. 1 to 5, the battery pack 10 may include a plurality of battery cells 100. The plurality of battery cells 100 may be arranged in an array along a plane. The plane may extend in the X-axis direction and the Y-axis direction. The array may comprise a row of battery cells along an axis. For example, the array may comprise a row of battery cells along the X-axis direction. The battery pack 10 may comprise an electrical connection extending along a surface of the array along the plane connected to electrodes of the plurality of battery cells 100. In one or more aspects, the electrical connection may be a bus-bar assembly 200. The battery pack 10 may further comprise a side frame 300. The side frame 300 may extend alongside the row of battery cells 100. The side frame 300 may have a metal member 400 embedded within it and the metal member 400 may be electrically connected to the electrical connection.

The plurality of battery cells 100, as secondary batteries, may be provided as cylindrical secondary batteries, pouch-type secondary batteries, or prismatic secondary batteries. Hereinafter, the present embodiment will be described on the assumption that the plurality of battery cells 100 is provided as cylindrical secondary batteries. However, it should be noted that the plurality of battery cells 100 are not necessarily limited to cylindrical battery cells. The plurality of battery cells 100 may be configured as a large number of battery cells having higher cell capacity to increase output and/or capacity for the construction of medium-to-large battery packs 10.

The bus-bar assembly 200 is for electrical connection of the plurality of battery cells 100 and may be disposed on one side of the plurality of battery cells 100. Specifically, the bus-bar assembly 200 may be disposed on the top of the plurality of battery cells 100 (in the +Z-axis direction) so as to be electrically connected to the plurality of battery cells 100 in one direction. In one or more aspects, the bus bar assembly 200 may extend over an entire upper surface of the array of battery cells 100.

The bus-bar assembly 200 may include sub-bus-bar units 210 connected to the electrodes 110 and 130 of the plurality of battery cells 100 for electrical connection.

The side frame 300 may support the plurality of battery cells 100 at the bottom of the bus-bar assembly 200 (in the -Z-axis direction). The side frame 300 may support the bus-bar assembly 200 and other components constituting the battery pack 10, in addition to the plurality of battery cells 100.

The side frame 300 may include a metal member 400 connected to the sub-bus-bar unit 210. The metal member 400 may have a predetermined length and area. In one or more aspects, at least a portion of the metal member 400 may be embedded within the side frame 300.

According to the present embodiment, when the sub-bus-bar unit 210 is electrically connected through the metal member 400 to be connected to the sub-bus-bar unit 210, the cross-sectional area corresponding to the metal member 400 may be further secured.

Therefore, according to the present embodiment, the stability of electrical connection may be further secured when electrically connecting the sub-bus-bar unit 210 and the electrodes 110 and 130 of the battery cells 100.

In addition, according to the present embodiment, since the metal member 400 is further provided in the side frame 300, the rigidity of the side frame 300 may be increased through the metal member 400.

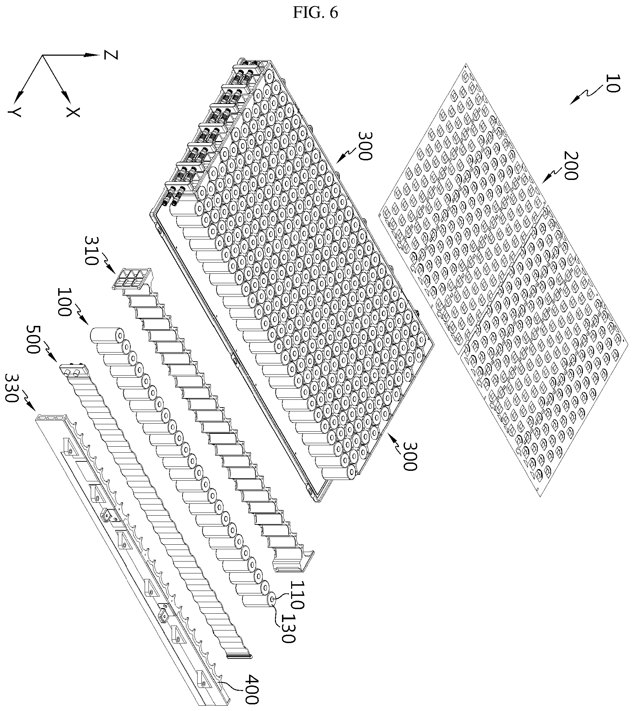

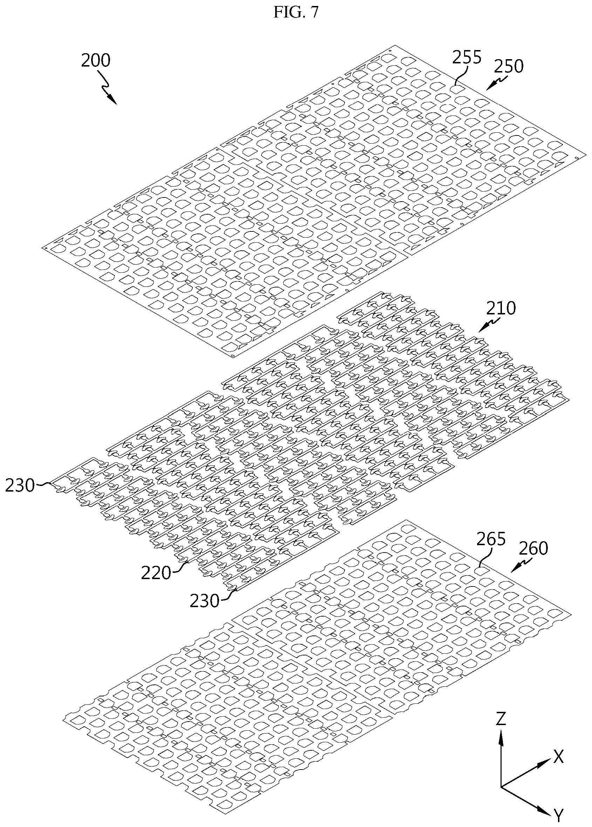

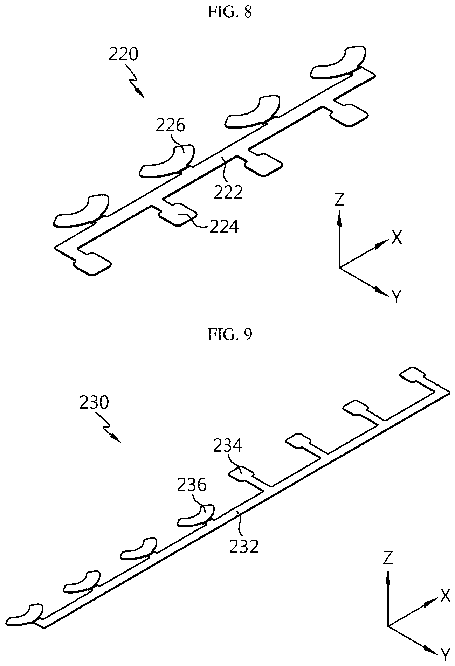

FIG. 6 is a partially exploded perspective view of a battery pack according to an aspect of the present disclosure, FIG. 7 is an exploded perspective view of a bus-bar assembly of the battery pack in FIG. 6, FIG. 8 is a diagram illustrating a two-way connection bus-bar of a sub-bus-bar unit of the bus-bar assembly in FIG. 7, and FIG. 9 is a diagram illustrating a one-way connection bus-bar of a sub-bus-bar unit of the bus-bar assembly in FIG. 7.

Referring to FIGS. 6 to 9 and the preceding drawings, the plurality of battery cells 100 may include a positive electrode 110 and a negative electrode 130, as electrodes 110 and 130, respectively. An insulating gasket 150 may be provided between the positive electrode 110 and the negative electrode 130 for electrical insulation.

In one or more aspects, the sub-bus-bar unit may comprise a first bus-bar 220 and a second bus-bar 210. The first bus-bar 220 may be elongated along a first axis and have connections to electrodes of a first subset of batteries on opposing sides of the first axis. In one or more aspects, the first axis may extend in the X-axis direction. The "first bus-bar 220" may also be referred to herein as a "two-way connection bus-bar 220."

In one or more aspects, the second bus-bar 230 may be elongated along a second axis and have connections to electrodes of a second subset of batteries on one side of the second axis. The second axis may extend in the X-axis direction. The second axis may be parallel to the first axis. The second subset of batteries may be in a row of battery cells along the second axis. The "second bus-bar 230" may also be referred to herein as a "one-way connection bus-bar 230."

The two-way connection bus-bar 220 may be connected to the electrodes 110 and 130 of the battery cells 100 on both sides of the sub-bus-bar unit 210 in the width direction (in the +Y-axis direction and -Y-axis direction).

The one-way connection bus-bar 230 may be connected to the electrodes 110 and 130 of the battery cells 100 on one side of the sub-bus-bar unit in the width direction (in the +Y-axis direction or -Y-axis direction).

The metal member 400 may be connected to the one-way connection bus-bar 230. When electrically connecting the sub-bus-bar unit 210 and the electrodes 110 and 130 of the battery cells 100, the one-way connection bus-bar 230 connected to the electrodes 110 and 130 of the battery cells 100 on one side of the sub-bus-bar unit 210 in the width direction (in the +Y-axis direction or -Y-axis direction) may be more likely to fuse, compared to the two-way connection bus-bar 220, due to high current. In the present embodiment, since the metal member 400 is connected to the one-way connection bus-bar 230, it is possible to obtain an additional cross-sectional area of the one- way connection bus-bar 230, thereby effectively preventing the risk of fusing of the one-way connection bus-bar 230.

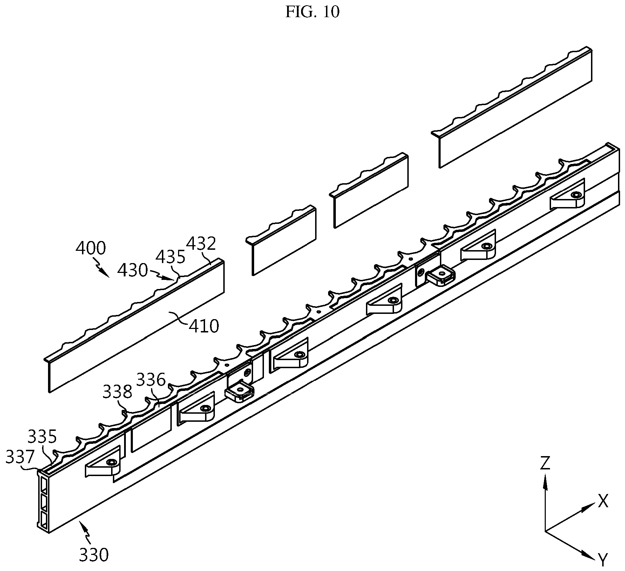

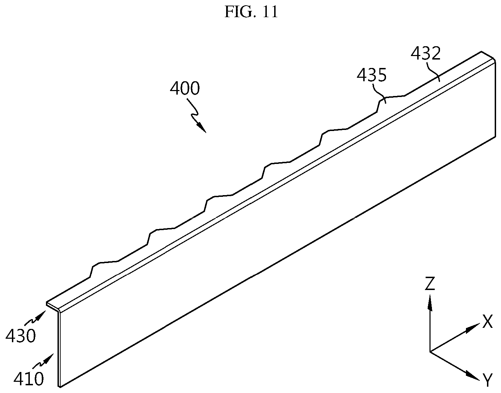

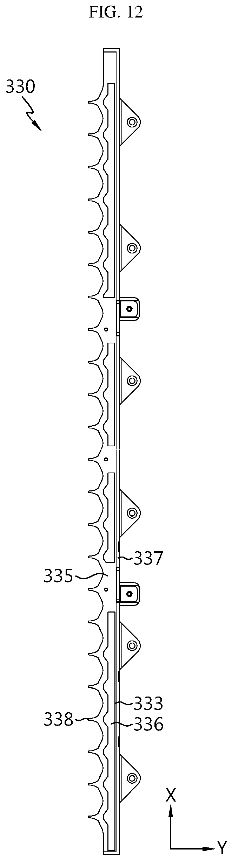

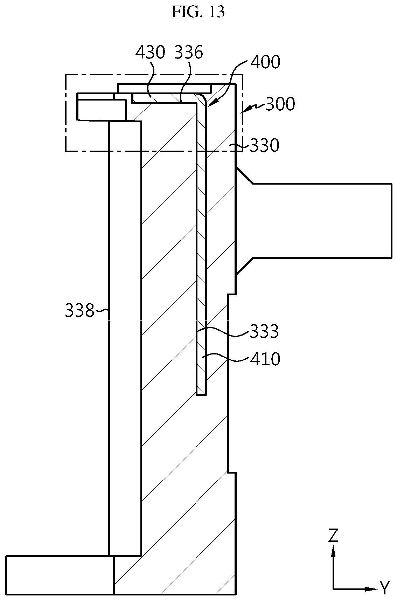

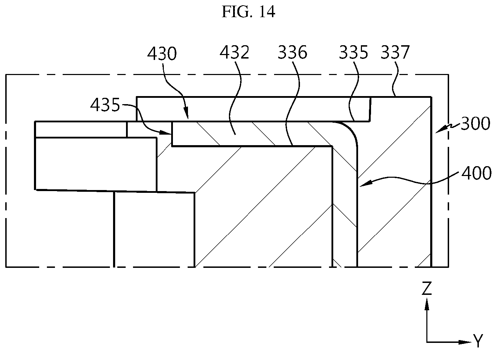

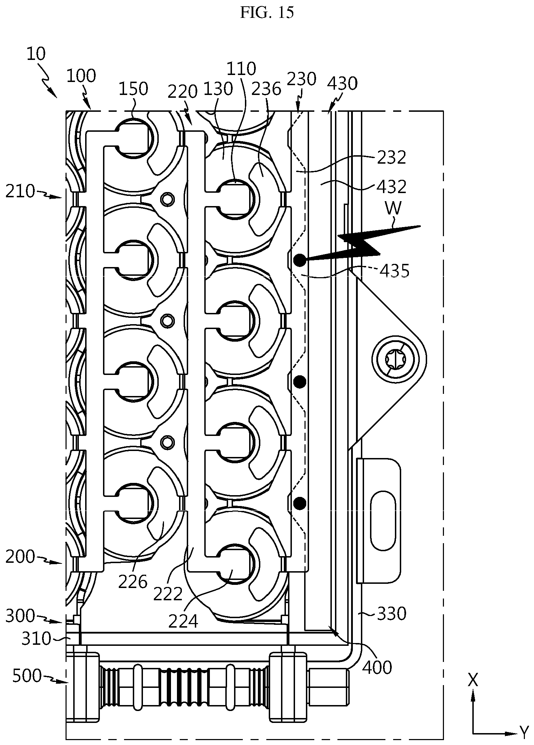

FIG. 10 is an exploded perspective view of a side wall of the side frame of the battery pack in FIG. 6, FIG. 11 is a diagram illustrating a metal member provided on the side wall in FIG. 10, FIG. 12 is a plan view schematically illustrating the side wall in FIG. 10 from which the metal member was removed, FIG. 13 is a cross-sectional view schematically illustrating the side wall in FIG. 10 including the metal member, FIG. 14 is a schematically enlarged view of primary elements of the side wall including the metal member in FIG. 13, and FIG. 15 is a diagram illustrating the connection between a bus-bar assembly and a metal member of the battery pack according to an embodiment of the present disclosure.

Referring to FIGS. 10 to 15 and the preceding drawings, a portion of the metal member 400 may be in contact with the one-way connection bus-bar 230 at the top of the side frame 300 (in the +Z-axis direction), the remaining portions of the metal member 400 may be inserted into the side frame 300. Therefore, the metal member 400 may be more stably fixed to the side frame 300 and connected to the one-way connection bus-bar 230 of the sub-bus-bar unit 210 of the bus-bar assembly 200 while being in contact therewith.

The metal member 400 may be inserted into the side frame 300, and one end thereof may be bent to be connected to the one-way connection bus-bar 230 at the top of the side frame 300. Specifically, the metal member 400 may have an integrally bent structure and may be mounted into the side frame 300. As described above, in the present embodiment, the connection between the metal member 400 and the one-way connection bus-bar 230 may be implemented through the insertion structure of the metal member 400, which is provided as a single member, into the side frame 300, making it possible to secure the cross-sectional area of the one-way connection bus-bar 230 to the metal member 400. In one or more aspects, the metal member 400 may be a single member.. In addition, in the present embodiment, the rigidity of the side frame 300 may be reinforced with a simpler structure through the metal member 400 inserted into the side frame 300.

The battery pack 10 may comprise a plurality of metal members 400. The battery pack may comprise any suitable number of metal members 400. In one or more aspects, the plurality of metal members 400 may be provided to correspond to the number of one-way connection bus-bars 230 of the sub-bus-bar unit 210. Therefore, in the present embodiment, it is possible to implement more uniform electrical stability of the sub-bus-bar unit 210 by securing the cross-sectional area of all of the one-way connection bus-bars 230 to the metal members 400. In addition, in the present embodiment, since the plurality of metal members 400 is inserted into the side frame 300, the rigidity of the side frame 300 may be further increased.

In one or more aspects, the metal member 400 may comprise a planar portion 430. The planar portion 430 may be exposed along an outer surface of the side frame 300. The planar portion 430 may extend parallel to the plane of the array. For example, the planar portion 430 may extend in a plane in the X-axis direction and the Y-axis direction. In one or more aspects, the second bus-bar 430 may be supported on top of the planar portion 430 of the metal member. It should be noted that the "planar portion 430" may also be referred to as the "bus-bar connection portion 430."

In one or more aspects, the metal member 400 may comprise a vertical portion 410. The vertical portion 410 may extend transverse to the planar portion 430. For example, the vertical portion may extend in the X-axis direction and the Z-axis direction. In one or more aspects, the vertical portion 410 may be embedded within the side frame 300. It should be noted that the "vertical portion 410" may also be referred to as the "insertion portion 410."

The insertion portion 410 may be inserted into the side frame 300 to embed the insertion portion 410 within the side frame 300. The insertion portion 410 may be configured in a substantially square plate to secure a predetermined cross-sectional area within the side frame 300.

The bus-bar connection portion 430 may be bent from the insertion portion 410 and connected to the one-way connection bus-bar 230 outside the side frame 300. The bus-bar connection portion 430 may support the bottom of the one-way connection bus-bar 230 at the top of the side frame 300 (in the +Z-axis direction) and may be connected to the one-way connection bus-bar 230 by contact.

The bus-bar connection portion 430 may include a connection body 432 and a protrusion 435.

The connection body 432 may be formed to have a predetermined length along the longitudinal direction (the X-axis direction) of the one-way connection bus-bar 230. The connection body 432 may be seated on the upper surface of the side frame 300. The connection body 432 may be integrally bent from the insertion portion 410 and may be at least partially in contact with the one-way connection bus-bar 230.

The protrusion 435 may protrude a predetermined length from the connection body 432 toward the one-way connection bus-bar 230. The protrusion 435 may be coplanar with the bus-bar connection portion 430. In one or more aspects, the protrusion may be coplanar with the connection body 432. The protrusion 435 may be in contact with the one-way connection bus-bar 230. The protrusion 435 may enable more stable contact between the one-way connection bus-bar 230 and the metal member 400. In addition, the protrusion 435 may secure an additional cross-sectional area of the metal member 400. In addition, the protrusion 435 may effectively prevent the metal member 400 from moving in the longitudinal direction (X-axis direction) and the width direction (Y-axis direction) of the battery pack 10 after insertion of the metal member 400 into the side frame 300.

The protrusion 435 may be connected to the one-way connection bus-bar 230. The protrusion 435 may be connected to the one-way connection bus-bar 230 by any suitable means, such as by welding W. The welding W may be laser welding. Therefore, in the present embodiment, it is possible to further secure connection stability between the metal member 400 and the one-way connection bus-bar 230 by welding the protrusion 435 to the one-way connection bus-bar 230. As described above, in the present embodiment, the protrusion 435 may also function as a welding point capable of ensuring contact stability between the metal member 400 and the one-way connection bus-bar 230.

The protrusion 435 may have any suitable shape. For example, the protrusion 435 may have a square, rectangular, triangular, semi-circular, or trapezoidal shape. In one or more aspects, the protrusion 435 may have a trapezoidal shape. In the present embodiment, the side frame 300 may receive and support the battery cells 100 provided as cylindrical secondary batteries. Due to the shape characteristics of the cylindrical secondary battery, the portion of the side frame 300 that receives the plurality of battery cells 100 may be configured in a concavo-convex shape. Specifically, the portion of the side frame 300 that receives the battery cells 100 may be configured in a shape in which convex portions and concave portions are alternately arranged in the longitudinal direction (X-axis direction) of the side frame 300. In the present embodiment, it is possible to effectively prevent interference with the metal member 400 that may occur in the receiving portion of the battery cells 100, which is configured as the convex and concave portions, by the protrusion 435 configured in the trapezoidal shape.

In one or more aspects, the bus-bar connection portion 430 may comprise a plurality of protrusions 435. The plurality of protrusions 435 may be arranged to be spaced a predetermined distance apart from each other in the longitudinal direction (X-axis direction) of the connection body 432. In one or more aspects, the plurality of protrusions may project from the metal member 400 and be spaced apart from one another along the axis of the row of battery cells 100. In such embodiments, it is possible to prevent the metal member 400 from moving in the longitudinal direction (X-axis direction).

The plurality of protrusions 435 may be disposed between the plurality of battery cells 100 in the longitudinal direction (X-axis direction) of the connection body 432. According to one or more aspects, the plurality of protrusions 435 may further reinforce the rigidity of the side frame 300 between the plurality of battery cells 100, which may prevent the plurality of battery cells 100 from moving in the longitudinal direction (X-axis direction) of the side frame 300.

The one-way connection bus-bar 230 may be positioned on the outermost portions on both sides of the sub-bus-bar unit 210 in the +Y-axis direction and -Y-axis direction. The metal member 400 may be positioned on the outermost portions on both sides of the side frame 300 in the +Y-axis direction and -Y-axis direction. In such aspects, the metal member 400 may prevent fusing of the sub-bus-bar unit 210 that may occur in the outermost portions on both sides of the side frame 300 and reinforce the rigidity of the outermost portions on both sides of the side frame 300.

Hereinafter, the side frame 300 according to an one or more aspects of the present disclosure will be described in more detail.

The side frame 300 may include a plurality of side structures 310 and a pair of side walls 330.

The plurality of side structures 310 may support the plurality of battery cells 100. The plurality of side structures 310 may be formed to have a predetermined length in the longitudinal direction (X-axis direction) of the battery pack 10, and may receive and support the battery cells 100 in two rows. The plurality of side structures 310 may be connected to each other while receiving and supporting the battery cells 100 in the width direction (Y-axis direction) of the battery pack 10.

The pair of side walls 330 may form both sides of the side frame 300 and may be the outermost portions of the side frame 300 on both sides of the plurality of side structures 310 in the +Y-axis direction and -Y-axis direction. Each of the pair of side walls 330 may receive and support the plurality of battery cells 100 at least in one row. The pair of side walls 330 may be connected to the side structures 310 facing each other in the width direction (Y-axis direction) of the battery pack 100.

Metal members 400 may be embedded within each of the pair of side walls 330. Since the metal members 400 are embedded within each of the pair of side walls 330, constituting both sides of the side frame 300, it is possible to reinforce the rigidity of the pair of side walls 330 on both sides of the side frame 300 (in the +Y-axis direction and -Y-axis direction) while ensuring the stability of electrical connection between the bus-bar assembly 200 and the battery cells 100 on both sides of the side frame 300.

In one or more aspects, a metal member 400 may be embedded within a side frame 300 through an insert molding process. In some aspects, metal members 400 may be mounted to each of the pair of side walls 330 through an insert molding process. The insert molding process may be performed during the manufacturing process of the side wall 330 or the assembly process of the side frame 300.

The side frame 300 may be constructed of a variety of materials. For example, the side frame 300 may be formed of polymeric materials, such as PC(Polycarbonate), PA(Polyamide), PC+ABS(Polycarbonate+Acrylonitrile Butadiene Styrene) alloy, ABS(Acrylonitrile Butadiene Styrene), etc.

For example, The side frame 300 may be made of polycarbonate, acrylonitrile butadiene styrene, modified polyphenylene oxide, glass fibers or a mixture thereof, in particular polycarbonate, a mixture of polycarbonate and acrylonitrile butadiene styrene or a mixture of modified polyphenylene oxide and glass fibers. Such material, in combination with the metal of the metal member increase the structural stability of the battery pack of the present invention and of a vehicle including the same.

The metal member 400 may be made of aluminum. Therefore, in the present embodiment, the electrical connection stability of the bus-bar assembly 200 may be realized using a lighter material.

The thickness of the metal member 400 may be at least 0.5 mm to 2 mm. In such aspects, the rigidity of the side wall 330 may be reinforced in the lateral direction (Y-axis direction) and in the height direction (Z-axis direction).

Each of the pair of side walls 330 may include a metal member-receiving portion 333, a metal member-seating portion 336, and a cell accommodation portion 338.

The metal member-receiving portion 333 may have a predetermined depth in the height direction (Z-axis direction) of the side wall 330. The metal member-receiving portion 333 may be provided as a receiving groove of a predetermined length. The insertion portion 410 of the metal member 400 may be inserted into the metal member-receiving portion 333. A ratio between the length of the insertion portion 410 (Z-axis direction) and the predetermined length of the metal member-receiving portion 333 may be from 1:4 to 9:10, in particular from 1:3 to 3:4, more particularly from 1:2 and 2:3. Advantageously, such ratio increases the structural stability of the battery pack of the present invention and of a vehicle including the same.

The metal member-seating portion 336 may be adjacent to the metal member-receiving portion 333 on the upper surface 335 of the side wall 330. The metal member-seating portion 336 may be shaped to accommodate the bus-bar connection portion 430 of the metal member 400. The bus-bar connection portion 430 of the metal member 400 may be seated on the metal member-seating portion 336.

The metal member-seating portion 336 may have a predetermined depth from the upper surface 335 of the side wall 330. The predetermined depth may be configured to correspond to the thickness of the bus-bar connection portion 430 of the metal member 400. In one or more aspects, the predetermined depth may be equal to the thickness of the bus-bar connection portion 430. In such aspects, when the bus-bar connection portion 430 of the metal member 400 is seated on the metal member-seating portion 336, the bus-bar connection portion 430 may not protrude outward from the upper surface 335 of the side wall 330.

Accordingly, in the present embodiment, when the metal member 400 is connected to the one-way connection bus-bar 230 of the sub-bus-bar unit 210 by contact, the one-way connection bus-bar 230 may be stably disposed on the upper surface 335 of the side wall 330.

In addition, in the present embodiment, since the bus-bar connection portion 430 is seated on the metal member-seating portion 336 by being inserted thereinto, it is possible to more reliably prevent the metal member 400 from moving or being separated from the side wall 330.

The cell accommodation portion 333 may receive and support the plurality of battery cells 100. In addition, the cell accommodation portion 333 may also receive and support a cooling tube 500, which will be described later. The cell accommodation portion 333 may be configured in a concavo-convex shape in the longitudinal direction (X-axis direction) of the side wall 330. This is a shape corresponding to the shapes of the plurality of battery cells 100 provided as cylindrical secondary batteries, and is intended to receive and support as many battery cells 100 as possible while minimizing dead space. In aspects where the battery cells 100 are not cylindrical secondary batteries, the cell accommodation portion 333 may have a different shape, suitable for accommodating the plurality of battery cells 100.

The edge 337 of the side wall 330 may be provided to protrude a predetermined height from the upper surface 335 of the side wall 330 in the height direction (Z-axis direction) of the side wall 330. The predetermined height may be equal to or greater than the height of the one-way connection bus-bar 230 of the sub-bus-bar unit 210. In such aspects, when the one-way connection bus-bar 230 of the sub-bus-bar unit 210 is seated on the side wall 330, the one-way connection bus-bar 230 may be seated on the upper surface 335 of the side wall 330 without protruding in the height direction (Z-axis direction) over the edge 337 of the side wall 330. Therefore, in such aspect, the one-way connection bus-bar 230 of the sub-bus-bar unit 210 may be disposed on the side wall 330 without being exposed outside the side wall 330.

In one or more aspects where the one-way connection bus-bar 230 of the sub-bus-bar unit 210 may not protrude from of the side wall 330 in the height direction (Z-axis direction) the risk of breakage or damage to the one-way connection bus-bar 230 may be reduced. Such breakage or damage may be caused by protrusion of the one-way connection bus-bar 230 in the height direction (Z-axis direction) from the side wall 330.

Hereinafter, the bus-bar assembly 200 and other components of the battery pack 10 will be described in more detail.

Referring to FIGS. 3 to 9, the bus-bar assembly 200 may include the sub-bus-bar unit 210 and bus-bar covers 250 and 260.

The sub-bus-bar unit 210 may comprise a plurality of two-way connection bus-bars 220.

Referring now to FIG. 8, each of the plurality of two-way connection bus-bars 220 may include a bus-bar body 222 and electrode connection portions 224 and 226.

The bus-bar body 222 may have a predetermined length and may be configured as a single layer structure. The bus-bar body 222 may be configured in a shape corresponding to the arrangement structure of the battery cells 100 to increase the efficiency of electrical connection with the battery cells 100.

The bus-bar body 222 may be made of a conductive material. In one or more aspects, the conductive material may comprise a metal material. For example, without limitation, the bus-bar body 222 may be made of a metal material such as aluminum or copper. However, the bus-bar body 222 may also be made of other conductive materials suitable for making the electrical connection.

The electrode connection portions 224 and 226 may include a positive electrode connection portion 224 and a negative electrode connection portion 226.

The positive electrode connection portion 224 may protrude from one side of the bus-bar body 222 in the width direction (+Y-axis direction or -Y-axis direction), and may be connected to the positive electrode 110 of the battery cell 100. In aspects where the two-way connection bus-bar 220 comprises a plurality of positive electrode connection portions 224, each of the positive electrode connection portions 224 may protrude from the same side of the bus-bar body 222.

The negative electrode connection portion 226 may protrude from the other side of the bus-bar body 222 in the width direction (-Y-axis direction or +Y-axis direction), which is the opposite side of the positive electrode connection portion 224 on one side of the bus-bar body 222 in the width direction. In aspects where the two-way connection bus-bar 220 comprises a plurality of negative electrode connection portions 226, each of the negative electrode connection portions 226 may protrude from the same side of the bus-bar body 222. The negative electrode connection portions 226 may be connected to the negative electrodes 130 of the battery cells 100.

The positive electrode connection portions 224 and the negative electrode connection portions 226 may be alternately arranged in the longitudinal direction (X-axis direction) of the bus-bar body 222. For example, as shown in FIG. 8, a plurality of positive electrode connection portions 224 may be disposed on one side of one bus-bar body 222 in the width direction (+Y-axis direction) and a plurality of negative electrode connection portions 226 may be disposed on the other side of the bus-bar body 222 in the width direction (-Y-axis direction) along the longitudinal direction (X-axis direction) of one bus-bar body 222. Here, the plurality of positive electrode connection portions 224 and the plurality of negative electrode connection portions 226 may be alternately arranged in the longitudinal direction (X-axis direction) of the single bus-bar body 222. The alternate arrangement may indicate that one negative electrode connection portions 226 is disposed between two positive electrode connection portions 224 in the longitudinal direction (X-axis direction) of the bus-bar body 222 and that one positive electrode connection portions 224 is disposed between two negative electrode connection portions 226 in the longitudinal direction (X-axis direction) of the bus-bar body 222.

As described above, the positive electrode connection portions 224 and the negative electrode connection portions 226 may protrude from both sides of the bus-bar body 222 in the width direction (+Y-axis direction and -Y-axis direction), thereby constituting the two-way connection bus-bar 220.

The sub-bus-bar unit 210 may comprise a plurality of one-way connection bus-bars 230.

Referring now to FIG. 9, each of the plurality of one-way connection bus-bars 230 may include a bus-bar body 232 and electrode connection portions 234 and 236.

The bus-bar body 232 may have a predetermined length and may be have a single layer structure. The bus-bar body 232 may have a shape corresponding to the arrangement structure of the battery cells 100 to increase the efficiency of electrical connection with the battery cells 100.

The bus-bar body 232, like the bus-bar body 222 of the two-way connection bus-bar 220, may be made of a conductive material. In one or more aspects, the conductive material may comprise a metal material. For example, without limitation, the bus-bar body 232 may be made of a metal material such as aluminum or copper. However, and the bus-bar body 232 may also be made of other conductive materials suitable for making the electrical connection.

The electrode connection portions 234 and 236 may include a positive electrode connection portion 234 and a negative electrode connection portion 236.

The positive electrode connection portion 234 may protrude from one side of the bus-bar body 232 in the width direction (+Y-axis direction or -Y-axis direction), and may be connected to the positive electrode 110 of the battery cell 100. In aspects where the one-way connection bus-bar 230 comprises multiple positive electrode connections portions 234, each of the positive electrode connection portions 234 may protrude from the same side of the bus-bar body 232.

The negative electrode connection portion 236 may protrude from one side of the bus-bar body 232 in the width direction (-Y-axis direction or +Y-axis direction). The negative electrode connection portion 236 may protrude from the same side of the bus-bar body 222 as the positive electrode connection portion 234. The negative electrode connection portions 236 may be connected to the negative electrodes 130 of the battery cells 100.

In one or more aspects, the positive electrode connection portion 234 and the negative electrode connection portion 236 may be configured to protrude from one side of the bus-bar body 232 in the width direction (+Y-axis direction or -Y-axis direction), thereby configuring the one-way connection bus-bar 230. In one or more aspects, the one-way connection bus-bar 230 may have only one of the positive electrode connection portion 234 and the negative electrode connection portion 236. In one or more aspects, the one-way connection bus-bar 230 may have both the positive electrode connection portion 234 and the negative electrode connection portion 236. For example, the one-way connection bus-bar 230, as shown in FIG. 9, has both a plurality of positive electrode connection portions 234 and a plurality of negative electrode connection portions 236 on one side of the bus-bar body 232 in the width direction (-Y-axis direction).

The plurality of one-way connection bus-bars 230 may be provided at the outermost portions (in the +Y-axis direction and -Y-axis direction) on both sides of the sub-bus-bar unit 210. The plurality of two-way connection bus-bars 220 may be disposed between the plurality of one-way connection bus-bars 230.

The bus-bar covers 250 and 260 may cover the top of the plurality of battery cells 100 (in the +Z-axis direction) and may be configured in a substantially flat plate. The shapes and sizes of the bus-bar covers 250 and 260 may vary depending on the number or capacity of battery cells 100 required for the battery pack 10.

The bus-bar covers 250 and 260 may be made of an insulating material. For example, without limitation, the bus-bar covers 250 and 260 may be made of a polyimide film. However, in some aspects, the bus-bar covers 250 and 260 may be insulating members comprising other insulating materials.

A plurality of bus-bar covers 250 and 260 may have shapes and sizes corresponding to each other in the vertical or height direction (Z-axis direction) of the battery pack 10. In one or more aspects, the plurality of bus-bar covers 250 and 260 may be coupled to each other with the sub-bus-bar unit 210 interposed therebetween.

Specifically, the plurality of bus-bar covers 250 and 260 may include a first cover 250 and a second cover 260.

The first cover 250 may cover the top of the sub-bus-bar unit 210 (in the +Z-axis direction). The first cover 250 may have a plurality of guide holes 255. The plurality of guide holes 255 may define a plurality of open spaces in the first cover 250. The plurality of guide holes 255 may expose the electrical connection portions of the electrodes 110 and 130 of the battery cells 100 and the sub-bus-bar unit 210, guiding the electrical connection between the electrodes 110 and 130 of the battery cells 100 and the sub-bus-bar unit 210.

The second cover 260 may cover the bottom of the sub-bus-bar unit 210 (in the -Z-axis direction). The second cover 260 may have a plurality of guide holes 265. The plurality of guide holes 265 may define a plurality of open spaces in the second cover 260. The plurality of guide holes 265 may have shapes and sizes corresponding to the plurality of guide holes 255 of the first cover 250. The plurality of guide holes 265 may be aligned with the plurality of guide holes 255 of the first cover 250 when the first cover 250 and the second cover 260 are coupled to each other.

The plurality of guide holes 265 of the second cover 260 and the plurality of guide holes 255 of the first cover 250 may expose electrical connections of the electrodes 110 and 130 of the battery cells 100 and the sub-bus-bar unit 210 and guide the electrical connections of the electrodes 110 and 130 of the battery cells 100 and the sub-bus-bar unit 210.

Referring now to FIG. 6, the battery pack 10 may include a cooling tube 500.

The cooling tube 500 may be formed to have a predetermined length for cooling the plurality of battery cells 100 and may be positioned between battery cells of the plurality of battery cells 100. In one or more aspects the cooling tube 500 may extend along a length of the battery pack in the X-axis direction. In one or more aspects, the battery pack 10 may comprise a plurality of cooling tubes 500.

The plurality of cooling tubes 500 may contact the outer surfaces of the plurality of battery cells 100 to increase cooling performance. In one or more aspects, the plurality of cooling tubes 500 may be supported by the side frame 300.

The plurality of cooling tubes 500 may comprise cooling channels for cooling medium flow. In addition, the plurality of cooling tubes 500 may be in fluid communication with a cooling device or the like for circulation of the cooling medium. The cooling medium may be a cooling fluid. The cooling fluid may be any fluid capable of exchanging heat with the surrounding environment. In one or more aspects, the cooling fluid may comprise water.

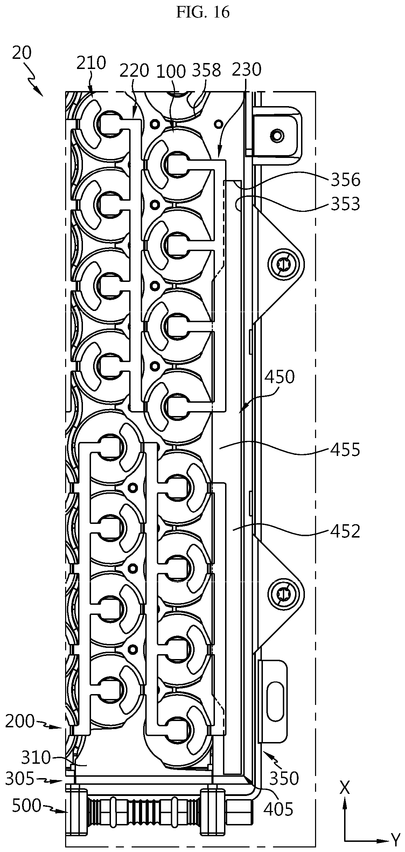

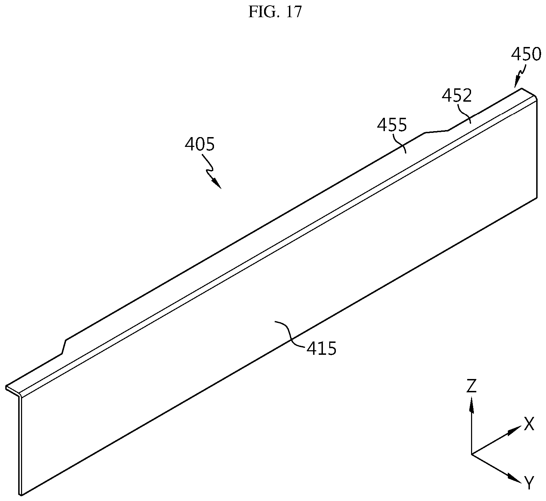

FIG. 16 is a diagram illustrating a battery pack according to another aspect of the present disclosure, and FIG. 17 is a diagram illustrating a metal member provided on the side wall of the side frame of the battery pack in FIG. 16. The configuration of the bus-bar covers 250 and 260 of the bus-bar assembly 200, which will be described later, is omitted from FIG. 16 for convenience of explanation.

Since the battery pack 20 according to the presently described aspects is similar to the battery pack 10 of the previously described aspects, redundant descriptions of the elements that are substantially the same as or similar to those of the previously described aspects will be omitted. Hereinafter, a description of the battery pack 20 will be made based on the differences from the previously described aspects.

Referring to FIGS. 16 and 17, the battery pack 20 may include the plurality of battery cells 100, the bus-bar assembly 200, a side frame 305, a metal member 405, and the cooling tube 500.

Since the plurality of battery cells 100 is substantially the same as or similar to the plurality of battery cells of the previously described aspects, a redundant description thereof is omitted.

The bus-bar assembly 200 may include a sub-bus-bar unit 210. Although omitted from FIG. 16, the bus-bar assembly 200 may include the bus-bar covers 250 and 260 (see FIG. 7) as described in the previous aspects.

The sub-bus-bar unit 210 may include a two-way connection bus-bar 220 and a one-way connection bus-bar 230.

Since the two-way connection bus-bar 220 and the one-way connection bus-bar 230 are substantially the same as or similar to those in the previously described aspects, redundant descriptions thereof are omitted.

The side frame 305 may include a plurality of side structures 310 and a pair of side walls 350.

Since the plurality of side structures 310 are substantially the same as or similar to those in the previously described aspects, a redundant description thereof is omitted.

Each of the pair of side walls 350 may include a metal member-receiving portion 353, a metal member-seating portion 356, and a cell accommodation portion 358.

Since the metal member-receiving portion 353 is similar to the previously described metal member-receiving portion 333, a redundant description thereof is omitted. Since the cell accommodation portion 358 is similar to the previously described cell accommodation portion 338, a redundant description thereof is omitted.

The metal member-seating portion 356 may be formed on the upper surface of the side wall 350 to a predetermined depth from the end of the metal member-receiving portion 353. The metal member-seating portion 356 may have a shape corresponding to the bus-bar connection portion 450 of the metal member 405.

The metal member 405 may include an insertion portion 415 and a bus-bar connection portion 450.

The insertion portion 415 may be inserted into the metal member-receiving portion 353 of the side wall 350. Since the insertion portion 415 is similar to the previously described insertion portion 410 of the previous aspects, a redundant description thereof is omitted.

The bus-bar connection portion 450 may include a connection body 452 and a protrusion 455.

Since the connection body 452 is similar to the previously described connection body 432 of the previous aspects, a redundant description thereof is omitted.

The protrusion 455 may protrude from the connection body 452. The protrusion 455 may be a single protrusion structure having a predetermined length and a predetermined width for each connection body 452. The one protrusion 455 for each connection body 452 may be configured in a substantially elongated trapezoidal shape.

In one or more aspects, the protrusion 455 protrudes into a long trapezoidal shape with a predetermined length and a predetermined width. In such aspects the protrusion 455 may have a relatively large surface area with respect to the plurality of protrusions 435 in the previously described aspects.

In one or more aspects, it is possible to secure an additional cross-sectional area of the metal member 405 to the one-way connection bus-bar. This may increase the stability of electrical connection when electrically connecting the metal member 405 and the one-way connection bus-bar 230.

Since the cooling tube 500 is substantially the same as or similar to that described in the previous aspects, a redundant description thereof is omitted.

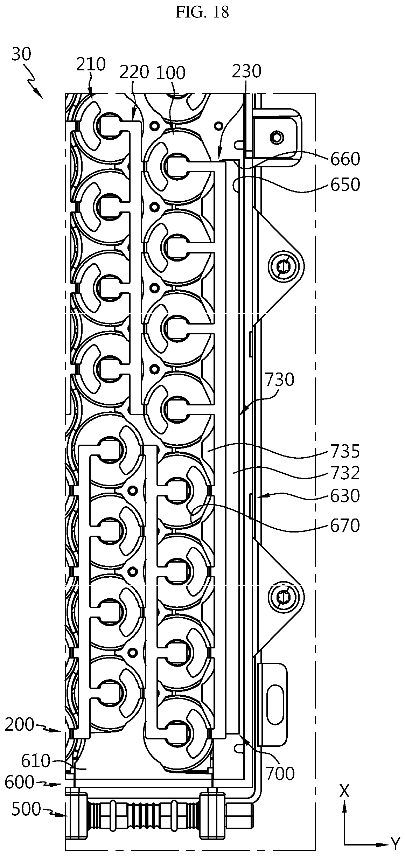

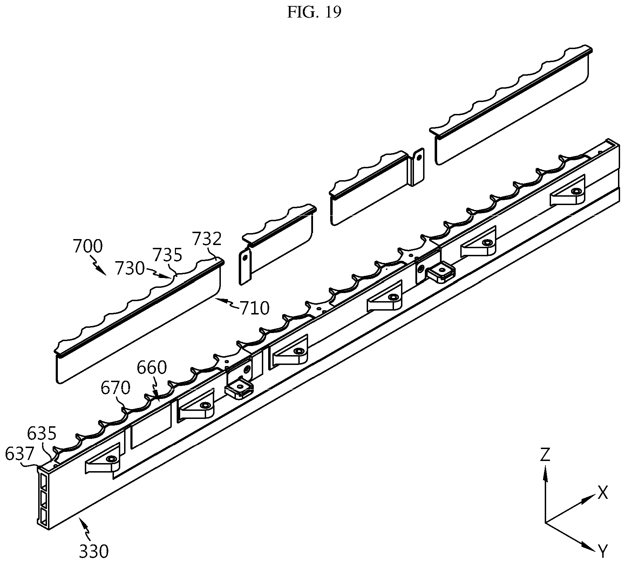

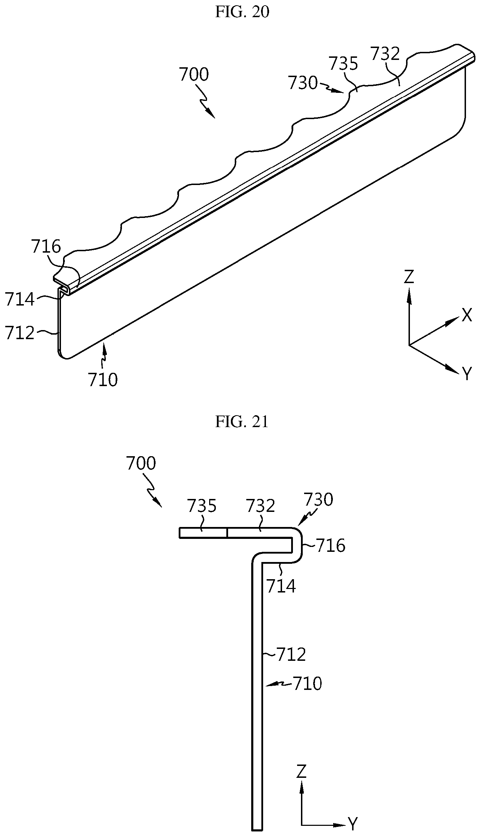

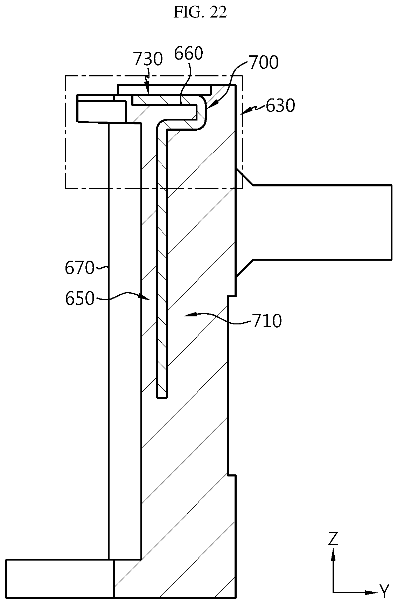

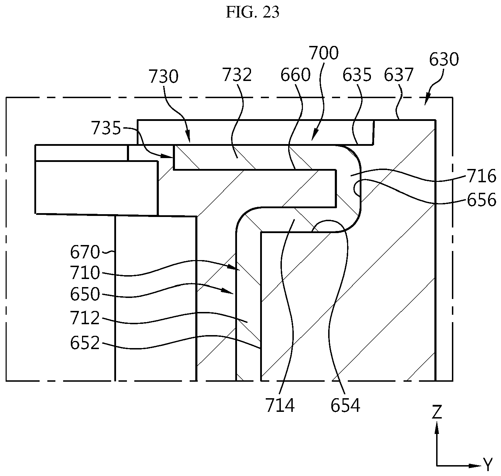

FIG. 18 is a diagram illustrating a battery pack according to another aspect of the present disclosure, FIG. 19 is an exploded perspective view of the side wall of the side frame provided in the battery pack in FIG. 18, FIG. 20 is a perspective view of the metal member provided on the side wall in FIG. 19, FIG. 21 is a side view of the metal member in FIG. 20, FIG. 22 is a cross-sectional view illustrating the side wall in FIG. 19 including the metal member, and FIG. 23 is a schematically enlarged view of primary elements of the side wall including the metal member in FIG. 22. The bus-bar covers 250 and 260 of the bus-bar assembly 200 are omitted from FIG. 18 for convenience of explanation.

Since the battery pack 30 according to the present aspects is similar to the battery pack 10 of the previously described aspects, redundant descriptions of elements that are substantially the same as or similar to those previously described are omitted.

Referring to FIGS. 18 to 23, the battery pack 30 may comprise the plurality of battery cells 100, the bus-bar assembly 200, the cooling tube 500, a side frame 600, and a metal member 700.

Since the plurality of battery cells 100 is substantially the same as or similar to that described in the previous aspects, a redundant description thereof is omitted.

The bus-bar assembly 200 may include the sub-bus-bar unit 210 and the bus-bar covers 250 and 260 (see FIG. 7). For convenience of explanation, the bus-bar covers 250 and 260 (see FIG. 7) are omitted from FIG. 18.

The sub-bus-bar unit 210 may include a two-way connection bus-bar 220 and a one-way connection bus-bar 230.

Since the two-way connection bus-bar 220 and the one-way connection bus-bar 230 are substantially the same as or similar to those described in the previous aspects, redundant descriptions thereof are omitted.

Since the cooling tube 500 is substantially the same as or similar to that described in the previous aspects, a redundant description thereof is omitted.

The side frame 600 may include a plurality of side structures 610 and a pair of side walls 630. Since the plurality of side structures 610 is substantially the same as or similar to the previously described plurality of side structures 310 in the previous aspects, a redundant description thereof is omitted.

Each of the pair of side walls 630 may include a metal member-receiving portion 650, a metal member-seating portion 660, and a cell accommodation portion 670.

The metal member-receiving portion 650 may have a groove structure that comprises multiple bends. In one or more aspects, the metal member-receiving portion 650 may include a first receiving portion 652, a second receiving portion 654, and a third receiving portion 656.

The first receiving portion 652 may be configured in an elongated groove having a predetermined length in the height direction (Z-axis direction) of the side wall 630 inside the side wall 630. In some aspects, the first receiving portion 652 may have a length that extends in a direction having a component in both the Z-axis direction and the Y-axis direction.

In one or more aspects, the second receiving portion 654 may extend in the horizontal direction (Y-axis direction) from the upper end of the first receiving portion 652 (in the +Z-axis direction). In some aspects, the second receiving portion 654 may extend in a direction normal to the first receiving portion 652. In one or more aspects, the second receiving portion 654 may extend in a direction having components in both the Y-axis direction and the Z-axis direction from the upper end of the first receiving portion 652. The second receiving portion 654 may extend to a predetermined length. In one or more embodiments, the length of the second receiving portion 654 is less than a length of the first receiving portion 652.

The third receiving portion 656 may extend in the height direction (Z-axis direction) from the end of the second receiving portion 654 of the side wall 630 toward the upper end of the side wall 630 (in the +Z-axis direction). The third receiving portion 656 may extend from the end of the second receiving portion 654 that is opposite the end of the second receiving portion 654 that extends from the first receiving portion 652. In some aspects, the third receiving portion 656 may extend in a direction normal to the second receiving portion 654. In one or more aspects, the third receiving portion may extend in a direction having components in both the Z-axis direction and the Y-axis direction. The third receiving portion 656 may be connected to a metal member-seating portion 660.

The metal member-seating portion 660 may be configured in a shape and size corresponding to the bus-bar connection portion 730 of the metal member 700, which is described in more detail below.

Since the cell accommodation portion 670 is otherwise similar to the cell accommodation portion 338 in the previously described aspects, a redundant description thereof is omitted.

The metal member 700 may comprise multiple bends. The metal member 700 may include an insertion portion 710 and a bus-bar connection portion 730.

The insertion portion 710 may include a first insertion portion 712, a second insertion portion 714, and a third insertion portion 716.

The first insertion portion 712 may be formed to have a predetermined length in the height direction (Z-axis direction) of the insertion portion 710. In one or more aspects, the first insertion portion 712 may have a length extending in a direction having a component in both the Z-axis direction and the Y-axis direction.

The second insertion portion 714 may extend in the horizontal direction (Y-axis direction) from the upper end of the first insertion portion 712 for a predetermined length. In some aspects, the second insertion portion 714 may extend in a direction normal to the first insertion portion 712. In one or more aspects, the second insertion portion 714 may extend in a direction having components in both the Y-axis direction and the Z-axis direction from the upper end of the first insertion portion 712. In one or more embodiments, a length of the second insertion portion 714 may be less than a length of the first insertion portion 712.

The third insertion portion 716 may extend in the height direction (Z-axis direction) from the end of the second insertion portion 714 toward the top of the insertion portion 710 (in the +Z-axis direction). The third insertion portion 716 may extend from the end of the second insertion portion 714 that is opposite the end of the second insertion portion 714 that extends from the first insertion portion 712. In some aspects, the third insertion portion 716 may extend in a direction that is normal to the second insertion portion 714. In one or more aspects, the third insertion portion 716 may extend in a direction having components in both the Z-axis direction and the Y-axis direction. The third insertion portion may have a predetermined length. In one or more aspects, the third insertion portion 716 may have a length less than the length of the first insertion portion 712.

In one or more aspects, the cross-sectional area of the insertion portion 710 may be increased through the first insertion portion 712 to the third insertion portion 716 in multistage bent structures relative to previously described insertion portion 410. This may further improve the stability of the electrical connection of the one-way connection bus-bar 230.

The first insertion portion 712 may be embedded within the first receiving portion 652, the second insertion portion 714 may be embedded within the second receiving portion 654, and the third insertion portion 716 may be embedded within the third receiving portion 656. In such aspects, it may be possible to prevent separation of the metal member 700 from the side wall 630 or movement of the metal member 700 within the side wall 630.

The bus-bar connection portion 730 may include a connection body 732 and a protrusion 735.

The connection body 732 may extend from the upper end of the third insertion portion 716 in the horizontal direction (Y-axis direction). In one or more aspects, the connection body 732 may extend in a direction opposite the direction in which the second insertion portion 714 extends from the first insertion portion 712. The connection body 732 may have a predetermined length in the horizontal direction (Y-axis direction). In some aspects, the length of the connection body 732 may be greater than a length of the second insertion portion 714.

The protrusion 735 may protrude integrally from the connection body 732. One end of the connection body 732 may extend integrally from the third insertion portion 716, and the other end of the connection body 732 may extend integrally to the protrusion 735.

The bus-bar connection portion 730 may comprise a plurality of protrusions 735. The plurality of protrusions 735 may be configured to protrude to a position close to the convex end of the cell accommodation portion 670 of the side wall 630 in the width direction (Y-axis direction).

In such aspects, the cross-sectional area of the protrusion 735 may be maximized on the side wall 630, which may increase the stability of the electrical connection of the one-way connection bus-bar 230.

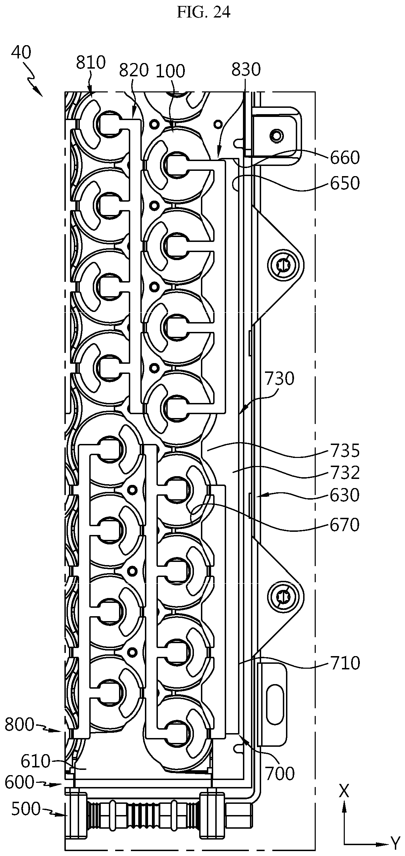

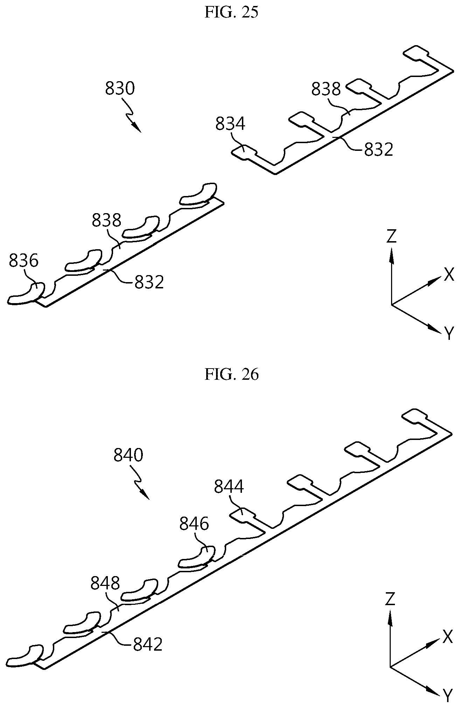

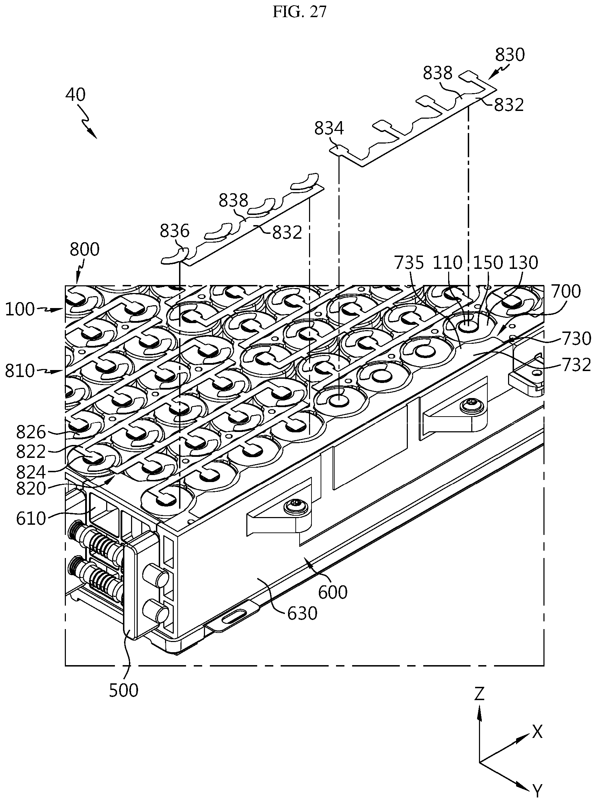

FIG. 24 is a diagram illustrating a battery pack according to another aspect of the present disclosure, FIG. 25 is a diagram illustrating a one-way connection bus-bar of the sub-bus-bar unit of the bus-bar assembly of the battery pack in FIG. 24, FIG. 26 is a diagram illustrating a one-way connection bus-bar according to another aspect of the sub-bus-bar unit of the bus-bar assembly of the battery pack in FIG. 24, and FIG. 27 is a diagram illustrating the connection between the one-way connection bus-bar and the metal member of the bus-bar assembly of the battery pack in FIG. 24. The configuration of the bus-bar covers of the bus-bar assembly 800are omitted from FIGS. 24 and 27 for convenience of explanation.

Since the battery pack 40 according to the present aspects is similar to the battery pack 30 of the previously described aspects, redundant descriptions of the elements that are substantially the same as or similar to those of the previous aspects are omitted.

Referring to FIGS. 24 to 27, the battery pack 40 may include the plurality of battery cells 100, the cooling tube 500, the side frame 600, the metal member 700, and a bus-bar assembly 800.

Since the plurality of battery cells 100 and the cooling tube 500 are substantially the same as or similar to those described in the previous aspects, redundant descriptions thereof are omitted.

The side frame 600 may include a plurality of side structures 610 and a pair of side walls 630.

Since the plurality of side structures 610 is substantially the same as or similar to that described in the previous aspects, a redundant description thereof is omitted.

Each of the pair of side walls 630 may include a metal member-receiving portion 650, a metal member-seating portion 660, and a cell accommodation portion 670.

Since the metal member-receiving portion 650, the metal member-seating portion 660, and the cell accommodation portion 670 are substantially the same as or similar to those described in the previous aspects, redundant descriptions thereof are omitted.

The metal member 700 may include an insertion portion 710 and a bus-bar connection portion 730.

Since the insertion portion 710 is substantially the same as or similar to that described in the previous aspects, a redundant description thereof is omitted.

The bus-bar connection portion 730 may include a connection body 732 and a plurality of protrusions 735.

Since the connection body 732 and the plurality of protrusions 735 are substantially the same as or similar to the previously described aspects, redundant descriptions thereof are omitted.

The bus-bar assembly 800 may include a sub-bus-bar unit 810 and a bus-bar cover. The bus-bar cover is substantially the same as or similar to the bus-bar cover 250 or 260 (see

FIG. 7) in the previously described aspects, and is omitted from FIGS. 24 and 27 for convenience of explanation.

The sub-bus-bar unit 810 may include a two-way connection bus-bar 820 and a one-way connection bus-bar 830.

The sub-bus-bar unit 810 may comprise a plurality of two-way connection bus-bars 820. Each of the plurality of two-way connection bus-bars 820 may comprise a bus-bar body 822 and electrode connection portions 824 and 826. The electrode connection portions 824 and 826 may include one or more positive electrode connection portions 824 and one or more negative electrode connection portions 826. Since the bus-bar body 822, the positive electrode connection portion 824, and the negative electrode connection portion 826 are the same as or similar to the bus-bar body 222, the positive electrode connection portion 224, and the negative electrode connection portion 226 in the previously described with respect to one or more aspects, redundant descriptions thereof are omitted.

The sub-bus-bar unit 810 may comprise a plurality of one-way connection bus-bars 830 and 840. Each of the plurality of one-way connection bus-bars 830 and 840 may include bus-bar bodies 832 and 842 and electrode connection portions 834, 836, 844, and 846. The electrode connection portions 834, 836, 844, and 846 may include one or more positive electrode connection portions 834 and 844 and one or more negative electrode connection portions 836 and 846. As shown in FIG. 25, the one-way connection bus-bar 830 may be configured to have only one of the positive electrode connection portions 834 and the negative electrode connection portions 836 provided on one bus-bar body 832. In addition, as shown in FIG. 26, the one-way connection bus-bar 840 may be configured to have both the positive electrode connection portions 844 and the negative electrode connection portions 846 provided on one bus-bar body 842. The configuration of the one-way connection bus-bar 830 or 840 may be determined by the type of electrical connection needed with the battery cells 100 or the arrangement of the one-way connection bus-bar 830 or 840 on the side wall 630.

The one-way connection bus-bars 830 and 840 may include cross-sectional reinforcement portions 838 and 848.

The cross-sectional reinforcement portions 838 and 848 may be integral to the bus-bar bodies 832 and 842. These cross-sectional reinforcement portions 838 and 848 may protrude a predetermined length from the bus-bar bodies 832 and 842 so as to have a predetermined cross-sectional area.

In one or more aspects, the cross-sectional area of the one-way connection bus-bar 830 or 840 may be increased through the cross-sectional reinforcement portion 838 or 848, relative to a comparable one-way connection bus-bar without such reinforcement portions. This may improve the stability of electrical connection of the one-way connection bus-bar 830 or 840.

The one-way connection bus-bars 830 and 840 may comprise a plurality of cross-sectional reinforcement portions 838 and 848. The plurality of cross-sectional reinforcement portions 838 and 848 may be positioned between the electrode connection portions 834, 836, 844 and 846.

The plurality of cross-sectional reinforcement portions 838 and 848 may protrude in the same direction as the electrode connection portions 834, 836, 844, and 846 in the width direction (the +Y-axis direction or -Y-axis direction) of the bus-bar body 832 or 842.

The plurality of cross-sectional reinforcement portions 838 and 848 may have a shape corresponding to the plurality of protrusions 735 of the bus-bar connection portion 730 of the metal member 700. The plurality of cross-sectional reinforcement portions 838 and 848 may be seated on the plurality of protrusions 735 for contact with the bus-bar connection portion 730 of the metal member 700 of the one-way connection bus-bar 830. In such aspects, the plurality of cross-sectional reinforcement portions 838 and 848 may be disposed to approximately or completely overlap the plurality of protrusions 735. The overlapping portions of the plurality of cross-sectional reinforcement portions 838 and 848 and the plurality of protrusions 735 may be connected by welding W (see FIG. 15) such as laser welding.

In such aspects, it is possible to improve welding accuracy during process of the welding the one-way connection bus-bars 830 and 840 and the metal member 700. It may also be possible to improve the ease of the welding process.

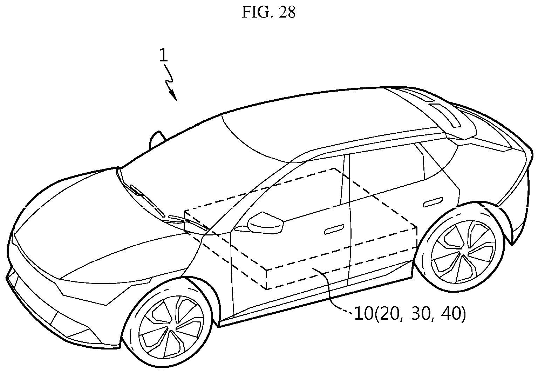

FIG. 28 is a diagram illustrating a vehicle according to an aspect of the present disclosure.

Referring to FIG. 28, a vehicle 1 according to an aspect of the present disclosure may include at least one battery pack 10, 20, 30, or 40 according to the present disclosure. The vehicle 1 may further include various other components in addition to the battery pack 10, 20, 30, or 40. For example, the vehicle 1 may include a car body, a motor, and a control device such as an electronic control unit (ECU).

In one or more aspects, the battery pack 10, 20, 30, or 40 may also be applied to other devices, instruments, or equipment using secondary batteries. For example, the battery pack 10, 20, 30, or 40 may be applied to an energy storage system.

According to the various aspects described above, it is possible to provide a battery pack 10, 20, 30, or 40 capable of maximizing energy density while ensuring the stability of electrical connection structure, and a vehicle 1 including the same.

In addition, according to the various aspects described above, it is possible to provide a battery pack 10, 20, 30, or 40 having increasedstructural rigidity and a vehicle 1 including the same.

Although the present disclosure has been described above with reference to specific aspects and drawings, the present disclosure is not necessarily limited thereto. Various modifications and variations are possible, based on the present disclosure, by those skilled in the art to which the present disclosure pertains. Such modifications and variations are within the scope of equivalence of the claims.

### Description of Reference Numerals

| | | | | | |
|---|---|---|---|---|---|
| 1: | Vehicle | | | | |
| 10, 20, 30, 40: | Battery pack | | | | |
| 100: | Battery cell | | | | |
| 110: | Positive electrode | 130: | Negative electrode | 150: | Insulating gasket |
| 200: | Bus-bar assembly | | | | |
| 210: | Sub-bus-bar unit | | | | |
| 220: | Two-way connection bus-bar | | | | |
| 222: | Bus-bar body | 224: | Positive electrode connection portion | 226: | Negative electrode connection portion |
| 230: | One-way connection bus-bar | | | | |
| 232: | Bus-bar body | 234: | Positive electrode connection portion | 236: | Negative electrode connection portion |
| 250, 260: | Bus-bar cover | | | | |
| 255, 265: | Guide opening | | | | |
| 300, 305: | Side frame | | | | |
| 310: | Side structure | | | | |
| 330: | Side wall | | | | |
| 333: | Metal member-receiving portion | 336: | Metal member-seating portion | 338: | Cell accommodation portion |
| 350: | Side wall | | | | |
| 353: | Metal member-receiving portion | 356: | Metal member-seating portion | 358: | Cell accommodation portion |
| 400: | Metal member | | | | |
| 410: | Insertion portion | 430: | Bus-bar connection portion | | |
| 432: | Connection body | 435: | Protrusion | | |
| 405: | Metal member | | | | |
| 415: | Insertion portion | 450: | Bus-bar connection portion | | |
| 452: | Connection body | 455: | Protrusion | | |
| 500: | Cooling tube | | | | |
| 600: | Side frame | | | | |
| 610: | Side structure | | | | |
| 630: | Side wall | | | | |
| 650: | Metal member-receiving portion | | | | |
| 652: | First receiving portion | 654: | Second receiving portion | 656: | Third receiving portion |
| 660: | Metal member-seating portion | | | | |
| 670: | Cell accommodation portion | | | | |
| 700: | Metal member | | | | |
| 710: | Insertion portion | | | | |
| 712: | First insertion portion | 714: | Second insertion portion | 716: | Third insertion portion |
| 730: | Bus-bar connection portion | | | | |
| 732: | Connection body | 735: | Protrusion | | |
| 800: | Bus-bar assembly | | | | |
| 810: | Sub-bus-bar unit | | | | |
| 820: | Two-way connection bus-bar | | | | |
| 822: | Bus-bar body | 824: | Positive electrode connection portion | 826: | Negative electrode connection portion |
| 830: | One-way connection bus-bar | | | | |
| 832: | Bus-bar body | 834: | Positive electrode connection portion | 836: | Negative electrode connection portion |
| 838: | Cross-sectional reinforcement portion | | | | |
| 840: | One-way connection bus-bar | | | | |
| 842: | Bus-bar body | 844: | Positive electrode connection portion | 846: | Negative electrode connection portion |
| 848: | Cross-sectional reinforcement portion | | | | |

## Claims

1. A battery pack (10,20,30,40) comprising:
a plurality of battery cells (100);
a bus-bar assembly (200,800) disposed on one side of the plurality of battery cells (100) and comprising a sub-bus-bar unit (210,810) connected to electrodes (110,130) of the plurality of battery cells (100); and
a side frame (300,305,600) configured to support the plurality of battery cells at the bottom of the bus-bar assembly (200,800) and comprising at least a metal member (400,405,700) connected to the sub-bus-bar unit (210,810).

2. The battery pack (10,20,30,40) according to claim 1,
wherein the sub-bus-bar unit (210,810) comprises:
a two-way connection bus-bar (220,820) connected to electrodes of the battery cells (100) on both sides of the sub-bus-bar unit (210,810) in the width direction; and
a one-way connection bus-bar (230,830,840) connected to the electrodes of the battery cells (100) on one side of the sub-bus-bar unit in the width direction, and
wherein the metal member (400,405,700) is connected to the one-way connection bus-bar (230,830,840).

3. The battery pack according to claim 2,
wherein a portion of the metal member is
in contact with the one-way connection bus-bar at the top of the side frame, and
the remaining portions of the metal member are inserted into the side frame.

4. The battery pack (10,20,30,40) according to claim 2,
wherein the metal member (400,405,700) is
inserted into the side frame (300,305,600) and has one end that is bent to be in connect with the one-way connection bus-bar (230,830,840) at the top of the side frame.

5. The battery pack (10,20,30,40) according to claim 2,
wherein the metal member (400,405,700) comprises:
an insertion portion (410,415,710) inserted into the side frame (300,305,600); and
a bus-bar connection portion (430,450,730) bent from the insertion portion to be connected to the one-way connection bus-bar (230,830,840) outside the side frame.

6. The battery pack (10,20,30,40) according to claim 5,
wherein a ratio between the length of the insertion portion of the metal member (Z-axis direction) and the height of the side frame (Z-axis direction) is from 1:4 to 9:10.

7. The battery pack (10,20,30,40) according to claim 5,
wherein the bus-bar connection portion (430,450,730) comprises:
a connection body (432,452,732) formed to have a predetermined length in the longitudinal direction of the one-way connection bus-bar (230,830,840); and
a protrusion (435,455,735) protruding a predetermined length from the connection body (432,452,732) toward the one-way connection bus-bar (230,830,840) so as to be in contact with the one-way connection bus-bar.

8. The battery pack (10,20,30,40) according to claim 7,
wherein the protrusion (435,455,735) is
connected to the one-way connection bus-bar (230,830,840) by welding.

9. The battery pack (10) according to claim 7,
wherein the protrusion (435,455) is
configured in a trapezoidal shape.

10. The battery pack (10,30,40) according to claim 7,
wherein a plurality of protrusions (435,735) is provided
to be spaced a predetermined distance apart from each other in the longitudinal direction of the connection body (432,732).

11. The battery pack (10,30,40) according to claim 8,
wherein the plurality of protrusions (435,735) is
disposed between the plurality of battery cells in the longitudinal direction of the connection body (432,732).

12. The battery pack (10) according to claim 2,
wherein the one-way connection bus-bar (230) is
provided at the outermost portions on both sides of the sub-bus-bar unit (210), and
wherein the metal member (400) is
provided at the outermost portions on both sides of the side frame (300).

13. The battery pack (10,20,30,40) according to any one of claims 1 to 12,
wherein the side frame (300,305,600) comprises:
a plurality of side structures (310,610) configured to support the plurality of battery cells; and
a pair of side walls (330,350,630) provided at the outermost portions on both sides of the plurality of side structures, and
wherein the metal member (400,405,700) is
provided on the pair of side walls.

14. The battery pack (10,20,30,40) according to any one of claims 1 to 13, wherein the metal member (400,405,700) is
mounted to the side frame through an insert molding process.

15. The battery pack (10,20,30,40) according to any one of claims 1 to 14, wherein the metal member (400,405,700) is
made of aluminum.

16. The battery pack (10,20,30,40) according to any one of claims 1 to 15, wherein the thickness of the metal member (400,405,700) is at least 2 mm.

17. The battery pack (10) according to any one of claims 1 to 16, wherein the side frame (300,305,600) is made of polycarbonate, acrylonitrile butadiene styrene, modified polyphenylene oxide, glass fibers or a mixture thereof.

18. A vehicle (1) comprising at least one battery pack (10,20,30,40) according to any one of claims 1 to 17.
